# EUROPÄISCHE PATENTSCHRIFT

(11) **EP 1 051 895 B1**
(45) Veröffentlichungstag und Bekanntmachung des Hinweises auf die Patenterteilung: **20.02.2008**
(21) Anmeldenummer: 00109577.7
(22) Anmeldetag: 05.05.2000
(51) Int. Cl.: A01B 63/32

(54) **Steuerung für landwirtschaftliche Arbeitsmaschine**
Agricultural working machine control
Contrôle pour machine de travail agricole

(30) Priorität: 14.05.1999 DE 19921957
(43) Veröffentlichungstag der Anmeldung: 15.11.2000
(73) Patentinhaber: CLAAS Saulgau GmbH, 88340 Bad Saulgau (DE)
(72) Erfinder: Wittrock, Bernd, 26899 Rhede-Brual (DE)

(56) Entgegenhaltungen:
- EP-A- 0 512 602
- DE-A- 1 812 208
- DE-A- 3 032 596
- DE-A- 4 322 263
- US-A- 3 657 969
- US-A- 4 320 589

## Beschreibung

Die Erfindung betrifft eine Steuerung für landwirtschaftliche Arbeitsmaschinen gemäß dem Oberbegriff des Anspruchs 1.

Eine derartige landwirtschaftliche Arbeitsmaschine ist am Beispiel eines mehrteilig ausgeführten Mähwerks in der deutschen Offenlegungsschrift DE-OS 43 22 263 offenbart, wobei eine Front- und zwei Seitenmäheinheiten an einem gemeinsamen Tragrahmen von einer Arbeits- in eine Transportstellung und umgekehrt verschwenkbar angeordnet sind. Der Hauptrahmen des mehrteilig ausgeführten Mähwerks verfügt über Anschlußstellen zur Adaptierung des Mähwerks an einem Trägerfahrzeug, wobei die Anschlußstellen so ausgeführt sind, daß die am Trägerfahrzeug angeordneten und einenends mit dem Mähwerk verbundenen um quer zur Fahrtrichtung verlaufende Achsen schwenkbaren Verstellelemente ebenfalls ein Verschwenken des Hauptrahmens des mehrteiligen Mähwerks um eine quer zur Fahrtrichtung liegende Schwenkachse zulassen. Auf diese Weise kann der Hauptrahmen des mehrteiligen Mähwerks in vertikaler Richtung von einer oberen Transport- in eine untere, bodennahe Arbeitsstellung verschwenkt werden. Zudem verfügen die Seitenmähwerke über weitere Verstellmittel, die gelenkig am Hauptrahmen angeordnet sind, sodaß die in Transportstellung in Fahrtrichtung weisenden Seitenmähwerke um annähernd vertikale Achsen nach außen in Arbeitsstellung und hier zusätzlich zur Bodenanpassung und zum Ausheben beim Überfahren des Vorgewendes um in Fahrtrichtung liegende Achsen verschwenkt werden können. Um sicherzustellen, daß die Arbeitsorgane beim Wenden der Maschine im Vorgewende nicht den in diesem Bereich liegenden durch bereits gemähtes Erntegut gebildeten sogenannten Randschwad nochmals aufnehmen, müssen das Frontmähwerk und die Seitenmähwerke während dieses Wendevorganges angehoben werden. Das Anheben der einzelnen Mähwerke kann einerseits dadurch erreicht werden, daß die das Frontmähwerk um eine quer zur Fahrtrichtung verlaufende Achse verschwenkenden Hubzylinder und die die Seitenmähwerke um jeweils eine in Fahrtrichtung liegende Achse verschwenkenden Hubzylinder vom Trägerfahrzeug aus separat druckbeaufschlagt werden, sodaß sowohl das Front- als auch die Seitenmähwerke vom Boden abheben. Andererseits ist es aber auch möglich mittels der am Trägerfahrzeug angeordneten Hubzylinder den Hauptrahmen des Mähwerks anzuheben, wobei gleichzeitig die um in Fahrtrichtung verschwenkenden Hubzylinder der Seitenmähwerke druckbeaufschlagt werden müssen, damit neben dem Frontmähwerk auch die Seitenmähwerke vom Boden abheben. Beide Vorgehensweisen erfordern ein konzentriertes Bedienen der Bordhydraulik durch den Trägerfahrzeugführer, damit stets sichergestellt wird, daß alle Mäheinheiten vor dem Überfahren des Randschwades einen ausreichend großen Abstand zum Boden haben, der ein nochmaliges Aufnehmen des im Vorgewende liegenden Erntegutes verhindert. Der stets am Feldrand wiederkehrende Aushebvorgang kann aufgrund seiner Komplexität eine konzentrationsbedingte Ermüdung des Trägerfahrzeugführers hervorrufen, in dessen Folge Fehlbedienungen dazu führen können, daß beim Überfahren des Randschwades nicht alle Mäheinheiten ausgehoben sind und ein Teil des Randschwades nochmals von einer oder mehreren Mäheinheiten aufgenommen wird.

Der Erfindung liegt deshalb die Aufgabe zugrunde, eine Steuerung einer mehrteilig ausgeführten landwirtschaftlichen Arbeitsmaschine gemäß dem Oberbegriff des Anspruchs 1 so zu gestalten, daß sich zur Entlastung des Trägerfahrzeugführers der Bedienaufwand zum Verschwenken der einzelnen Arbeitseinheiten der mehrteilig ausgeführten landwirtschaftlichen Arbeitsmaschine deutlich reduziert und dieser reduzierte Bedienaufwand mittels einer konstruktiv einfachen und kostengünstigen Schaltung realisiert wird.

Erfindungsgemäß wird die Aufgabe durch eine Steuerung für eine mehrteilig ausgeführte landwirtschaftliche Arbeitsmaschine mit den kennzeichnenden Merkmalen des Anspruchs 1 gelöst.

Durch die Verbindung des Kolbenstangen-Druckraumes des wenigstens einen das mehrteilige landwirtschaftliche Arbeitsgerät mit dem Trägerfahrzeug verbindenden doppeltwirkenden Hubzylinders des Trägerfahrzeugs und des Kolbenstangen-Druckraumes wenigstens eines Verstellelementes einer Arbeitseinheit wird erreicht, daß das Druckbeaufschlagen des oder der Hubzylinder des Trägerfahrzeugs zum Ausheben des Hauptrahmens der landwirtschaftlichen Arbeitsmaschine selbsttätig dazu führt, daß wenigstens eine Arbeitseinheit zusätzlich durch das ihr zugeordnete Verstellelement angehoben wird. Auf diese Weise wird sichergestellt, daß bei mehrteilig ausgeführten landwirtschaftlichen Arbeitsmaschinen durch Auslösung eines einzigen Verstellvorganges mehrere Arbeitseinheiten in ihrer Lage verändert werden können, ohne das die den Verstellvorgang auslösende Bedienperson verschiedene Bedienelemente betätigen oder eine bestimmte Reihenfolge ihrer Betätigung einhalten muß.

Auf konstruktiv einfache Weise verfügt das die Kolbenstangen-Druckräume verbindende Leitungssystem über ein elastisches, das energieübertragende Medium aufnehmendes Speicherelement, welches in der Arbeitsstellung der mehrteiligen landwirtschaftlichen Arbeitsmaschine den Auflagedruck wenigstens einer Arbeitseinheit auf dem Boden reguliert und andererseits durch den Kontakt der Arbeitseinheit mit dem Boden auf die landwirtschaftliche Arbeitsmaschine übertragene Stoßbelastungen dämpft, sodaß an sich übliche mechanische Entlastungselemente entfallen können.

In einer weiteren vorteilhaften Ausführung ist dem elastischen Speicherelement ein steuerbares Absperrventil zugeordnet, welches das elastische Speicherelement während des Verschwenkens der Arbeitseinheiten von der Arbeits- in die Transportstellung und umgekehrt sperrt, wodurch das das energieübertragende Medium aufnehmende System in konstruktiv einfacher Weise geschlossen ausgeführt werden kann.

Die Ansteuerung des Absperrventils erfolgt in vorteilhafter Weise durch in das System integrierte Druckaufnehmer, die in Abhängigkeit vom Systemdruck das elastische Speicherelement vom System trennen oder zuschalten. In vorteilhafter Weise sind dem das energieübertragende Medium aufnehmenden System einer Arbeitseinheit wenigstens zwei Druckaufnehmer zugeordnet, deren Zuschalt- und Trennfunktion so aufeinander abgestimmt ist, daß das aus dem Hubzylinder des Trägerfahrzeugs verdrängte und von wenigstens einem Verstellelement der Arbeitseinheit nicht mehr aufnehmbare energieübertragende Medium in den elsatischen Speicher entweichen kann, sodaß die Kolbenstangen-Druckräume der miteinander verbundenen Verstellelemente nicht aufeinander abgestimmt sein müssen und das System insgesamt trotz vorhandenem, zum Schutz vor Überlastung vorgesehenen Druckbegrenzungsventil geschlossen ausgeführt sein kann.

Vorteilhafte Ausgestaltungen sind Gegenstand weiterer Unteransprüche und werden anhand eines in Zeichnungen dargestellten Ausführungsbeispiels näher erläutert.

Es zeigen
- Figur 1: eine mehrteilige landwirtschaftliche Arbeitsmaschine mit erfindungsgemäßer Steuerung in Ansicht von oben
- Figur 2: eine Detailansicht der erfindungsgemäßen Steuerung für eine landwirtschaftliche Arbeitsmaschine

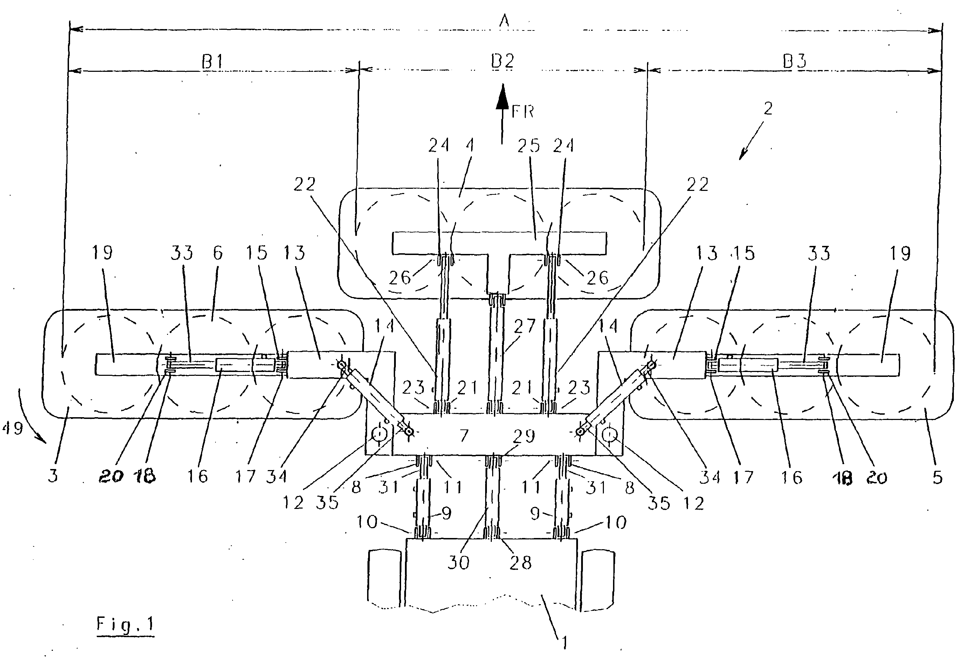

Figur 1 zeigt eine an einem Trägerfahrzeug 1 frontseitig adaptierte, mehrteilig ausgeführte landwirtschaftliche Arbeitsmaschine 2, deren schematisch dargestellten Arbeitseinheiten 3-5 die Gesamtarbeitsbreite A der landwirtschaftlichen Arbeitsmaschine 2 in Einzelarbeitsbreiten B1-B3 unterteilen, wobei die als rotierende Mähorgane 6 angedeuteten Arbeitsorgane der Arbeitseinheiten 3-5 auch durch beliebige landwirtschaftliche Arbeitsorgane, wie beispielsweise Bodenbearbeitungsorgane, zur Heuwerbung einsetzbare Schwad- oder Rechkreisel und beliebig ausgeführte Mähorgane ersetzt sein können.

Die somit als mehrteiliges Großflächenmähwerk ausgeführte landwirtschaftliche Arbeitsmaschine 2 verfügt über einen Hauptrahmen 7, der in seinem rückwärtigen Bereich Anschlußstellen 8 aufweist, in die jeweils das kolbenstangenseitige Ende zweier doppeltwirkender Hubzylinder 9 eingreift, die anderenends am Trägerfahrzeug 1 um eine quer zur Fahrtrichtung FR verlaufende Achse 10 verschwenkbar angeordnet sind, wobei das kolbenstangenseitige Ende der Hubzylinder 9 und die Anschlußstellen 8 ebenfalls von einer quer zur Fahrtrichtung FR liegenden Schwenkachse 11 durchsetzt werden.

Der Hauptrahmen 7 verfügt beidendig über in vertikale Richtung weisende Schwenkachsen 12, an welchen L-formige Seitenrahmen 13 drehbar angelenkt sind, wobei die Drehbewegung um Achse 12 dadurch erreicht wird, daß jeder Seitenrahmen 13 zusätzlich über jeweils einen Doppelhubzylinder 14 mit dem Hauptrahmen 7 verbunden ist. Jeder Seitenrahmen 13 verfügt über Halteflansche 15, die jeweils das zylinderseitige Ende von einfachwirkenden Hubzylindern 16 um in Fahrtrichtung FR weisende Achsen 17 drehbar aufnehmen. Kolbenstangenseitig sind die Hubzylinder 16 ebenfalls um in Fahrtrichtung FR weisende Achsen 18 am Hauptrahmen 19 der seitlichen Arbeitseinheiten 3, 5 in Halteflanschen 20 drehbar angelenkt, wobei die Arbeitseinheiten 3, 5 in an sich bekannter Weise über wenigsten ein weiteres, nicht dargestelltes Gelenk mit den Seitenrahmen 13 verbunden sind, sodaß eine Druckbeaufschlagung der Hubzylinder 16 zu einem Verschwenken der Arbeitseinheiten 3, 5 in vertikaler Richtung führt.

Damit auch ein Verschwenken der frontseitig am Hauptrahmen 7 angeordneten Arbeitseinheit 4 möglich wird, verfügt der Hauptrahmen 7 über weitere Halteflansche 21, die das zylinderseitige Ende von einfachwirkenden Hubzylindern 22 um quer zur Fahrtrichtung FR liegende Achsen 23 schwenkbar aufnehmen. Das kolbenstangenseitige Ende der Hubzylinder 22 wird von Halteösen 24, die am Hauptrahmen 25 der Arbeitseinheit 4 angeordnet sind um ebenfalls quer zur Fahrtrichtung FR angeordnete Achsen 26 drehbar aufgenommen. Durch Zwischenschaltung wenigstens einer, in ihrer Länge nicht veränderbaren Koppel 27 zwischen Arbeitseinheit 4 und Hauptrahmen 7, wird sichergestellt, daß bei Druckbeaufschlagung der Hubzylinder 22, die frontseitige Arbeitseinheit 4 in vertikaler Richtung verschwenken kann. Da es zur Realisierung einer vertikalen Schwenkbewegung der frontseitigen Arbeitseinheit 4 nur darauf ankommt, daß die frontseitige Arbeitseinheit 4 neben ihrer längenveränderlichen Anlenkung am Hauptrahmen 7 mittels Hubzylinder 22 über wenigstens eine weitere gelenkige Verbindung zum Hauptrahmen 7 verfügt, kann die dargestellte Koppel 27 auch durch einen beliebig ausgeführten Koppelmechanismus ersetzt sein.

Um auch die gesamte landwirtschaftliche Arbeitsmaschine 2 in vertikaler Richtung in der Höhe verstellen zu können, kann im einfachsten Fall zwischen Trägerfahrzeug 1 und landwirtschaftlicher Arbeitsmaschine 2 eine in Halteflanschen 28, 29 drehbar gelagerte, in ihrer Länge nicht veränderbare Koppel 30 angeordnet sein, sodaß eine Druckbeaufschlagung der Hubzylinder 9 durch die an sich bekannte und deshalb nicht dargestellte Bordhydraulik des Trägerfahrzeugs 1 zum Verschwenken des Hauptrahmens 7 des landwirtschaftlichen Arbeitsgerätes 2 in vertikaler Richtung führt, wobei die Koppel 30 auch durch einen beliebig ausgeführten, diese Schwenkbewegung zulassenden Koppelmechanismus ersetzt sein kann.

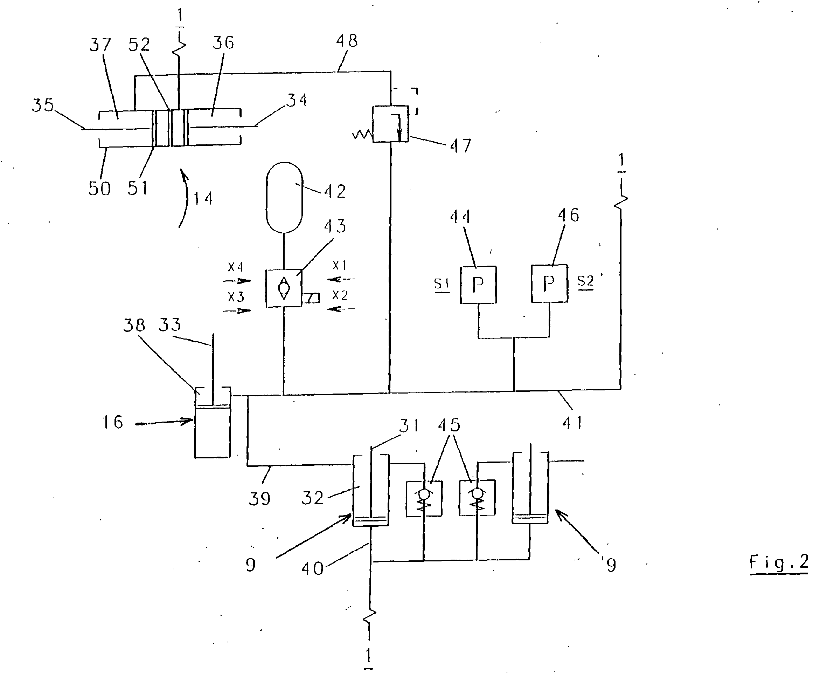

In Figur 2 ist die erfindungsgemäße Steuerung der landwirtschaftlichen Arbeitsmaschine 2 an Hand der Arbeitseinheit 3 und dem in Fahrtrichtung FR gesehen linken Hubzylinder 9 des Trägerfahrzeugs 1 dargestellt, wobei die folgenden Ausführungen in gleicher Weise auch für die Arbeitseinheit 5 und dem mit ihren Verstellelementen 14, 16 in Wirkverbindung stehenden rechten Hubzylinder 9 des Trägerfahrzeugs 1 gelten.

In Arbeitsposition der landwirtschaftlichen Arbeitsmaschine 2 ist die Kolbenstange 31 des doppeltwirkenden Hubzylinders 9 in den Kolbenstangen-Druckraum 32 eingefahren, während sich die Kolbenstange 33 des die vertikale Schwenkbewegung der Arbeitseinheit 3 realisierenden einfachwirkenden Hubzylinders 16 in ausgefahrener Position befindet. Der das Verschwenken der Arbeitseinheit 3 um Achse 12 realisierende Doppelhubzylinder 14 verfügt über zwei Kolbenstangen 34, 35, deren Druckräume 36, 37 durch eine Wand 52 voneinander getrennt sind, wobei in Arbeitsstellung der Arbeitseinheit 3 die mit dem L-förmigen Seitenrahmen 13 verbundene Kolbenstange 34 in den Kolbenstangen-Druckraum 36 und die am Hauptrahmen 7 angelenkte Kolbenstange 35 in den Kolbenstangen-Druckraum 37 eingefahren ist.

Erfindungsgemäß sind die Kolbenstangen-Druckräume 32, 38 der Hubzylinder 9, 16 durch eine Leitung 39 miteinander verbunden, sodaß bei Druckbeaufschlagung des Hubzylinders 9 über Leitung 40 das aus dem Kolbenstangen-Druckraum 32 verdrängte energieübertragende Medium mittels Leitung 39 in den Kolbenstangen-Druckraum 38 und Leitungssystem 41 geschoben wird. Dabei fährt die Kolbenstange 33 des Hubzylinders 16 in Druckraum 38 ein und die mit der Kolbenstange 33 verbundene Arbeitseinheit 3 führt eine Schwenkbewegung in vertikaler Richtung durch. Auf diese Weise wird sichergestellt, daß beim Ausheben des Hauptrahmens 7 aufgrund von Bodenunebenheiten oder aufgrund des Randschwades im Vorgewende die seitliche Arbeitseinheit 3 selbsttätig in vertikaler Richtung nach oben verschwenkt, ohne das der Trägerfahrzeugführer diesen Verstellvorgang separat auslösen muß. Wird umgekehrt Leitung 40 durch den Trägerfahrzeugführer drucklos geschaltet, bewegt sich die Kolbenstange 31 aufgrund der Eigenmasse der landwirtschaftlichen Arbeitsmaschine 2 wieder in den Kolbenstangen-Druckraum 32, wobei ein Teil des energieübertragenden Mediums des Kolbenstangen-Druckraumes 38 und des Leitungssystems 41 wieder zurück in den Kolbenstangen-Druckraum 32 geschoben wird, sodaß sich Kolbenstange 33 wieder aus dem Hubzylinder 16 herausbewegt. Auch beim Verschwenken von einer Nichtarbeits- in die Arbeitsposition muß der Trägerfahrzeugfuhrer nur einen Verstellvorgang auslösen, wodurch auch beim Verschwenken von einer Nichtarbeits- in die Arbeitsposition ein erheblich reduzierter Bedienaufwand für den Trägerfahrzeugführer erreicht wird.

Da die in Arbeitsposition den Boden berührende Arbeitseinheit 3 in Abhängigkeit von Bodenunebenheiten Stoßbelastungen auf die landwirtschaftliche Arbeitsmaschine überträgt, wobei die Kolbenstange 33 im Druckraum 38 verschiedene Lagen einnimmt, ist im Leitungssystem 41 ein elastischer Druckspeicher 42 vorgesehen, der dem Kolbenstangen-Druckraum 38 in Abhängigkeit von der Stellung der Kolbenstange 33 energieübertragendes Medium zuführt oder aus dem Kolbenstangen-Druckraum 38 herausgeschobenes energieübertragendes Medium aufnehmen kann. Auf diese Weise übernimmt der elastische Druckspeicher 42 die Funktion eines Stöße abfedernden Dämpfungselementes, sodaß die bei herkömmlichen, gattungsgleichen landwirtschaftlichen Maschinen vorgesehenen mechanischen Dämpfungselemente, beispielsweise Druckfedern, entfallen können. Zudem ist bei einer derartigen Ausführung der Auflagedruck der Arbeitseinheit auf dem Boden frei einstell- und im Vergelich zu mechanischen Verstellelmechanismen, wie beispielsweise Federn, schnell handhabbar.

Damit beim Verschwenken der landwirtschaftlichen Arbeitsmaschine 2 von der Arbeits- in die Transportstellung sowie beim Ausheben im Vorgewende kein energieübertragendes Medium in den elastischen Druckspeicher 42 entweichen kann, was ein Ausheben der seitlichen Arbeitseinheit 3 beeinträchtigen oder verhindern würde, ist dem elastischen Druckspeicher 42 ein steuerbares Absperrventil 43 vorgeschaltet, welches während der Druckbeaufschlagung von Hubzylinder 9 durch die Betätigungselemente des Trägerfahrzeugs 1 ein Stellsignal X1 zum Schließen erhält, so daß der elastische Druckspeicher 42 während dieses Verschwenkvorganges vom Leitungssystem 41 getrennt ist. Um zu gewährleisten, daß das Absperrventil 43 geschlossen bleibt, solange die landwirtschaftliche Arbeitsmaschine 2 in einer angehobenen Postion verharrt, ist dem Leitungssytem 41 ein Druckaufnehmer 44 zugeordnet, der nach Unterbrechung der Druckbeaufschlagung von Hubzylinder 9 und damit nach Wegfall des Schließsignals X1 ein Signal X2 generiert, welches das Absperrventil 43 weiterhin geschlossen hält, sodaß auch die seitliche Arbeitseinheit 3 in angehobener Position verharrt.

Nachdem Leitung 40 vom Trägerfahrzeug 1 aus drucklos geschaltet wird, senkt sich der Hauptrahmen 7 der landwirtschaftlichen Arbeitsmaschine 2 und über die erfindungsgemäße Leitung 39 auch Arbeitseinheit 3 wieder ab. Am Druckaufnehmer 44 ist ein Schwellwert S1 einstellbar, bei dessen Unterschreitung durch den Systemdruck im Druckaufnehmer 44 ein Signal X3 generiert wird, welches das Absperrventil 43 wieder öffnet. Auf diese Weise ist es möglich in Abhängigkeit vom Systemdruck den Auflagedruck der Arbeitseinheit 3 auf den Boden einzustellen und gleichzeitig dafür zu sorgen, daß beim Erreichen der Arbeitsposition der Arbeitseinheit 3 ein Stoßbelastungen aufnehmendes Element, nämlich der elastische Druckspeicher 42 vorhanden ist. Da jeder Hubzylinder 9 zur Vermeidung von Überlastungen des jeweiligen Systems mit einem Sicherheitsventil 45, welches als Rückschlag- oder Druckbegrenzungsventil ausgeführt sein kann, gekoppelt ist, kann es bei Druckbeaufschlagung von Hubzylinder 9 dann zum Öffnen dieses Sicherheitsventils 45 kommen, wenn das aus dem Kolbenstangen-Druckraum 32 verdrängte energieübertragende Medium von Kolbenstangen-Druckraum 38 nicht vollständig aufgenommen werden kann, sodaß es zu einem Druckanstieg im System kommt. Auf diese Weise würde dem System energieübertragendes Medium über Sicherheitsventil 45 verlorengehen. In einer weitem vorteilhaften Ausführung ist deshalb im Leitungssystem 41 ein weiterer Druckaufnehmer 46 vorgesehen, der bei Druckbeaufschlagung von Hubzylinder 9 immer dann ein Signal X4 zur Öffnung des Absperrventils 43 generiert, wenn der Systemdruck einen am Druckaufnehmer 46 einstellbaren Schwellwert S2 übersteigt, so daß das vom Kolbenstangen-Druckraum 38 nicht aufnehmbare energieübertragende Medium in den Druckspeicher 42 entweichen kann, ohne das es dem System verlorengeht.

In an sich bekannter Weise kann die Arbeitseinheit 3 außerdem mit einer Auffahrsicherung ausgestattet sein, die beim Auflaufen auf ein Hindernis gleichzeitig ein Verschwenken und Anheben der Arbeitseinheit 3 ermöglicht. Hierfür wird der Druckraum 37 der mit dem L-förmigen Seitenrahmen 13 verbundenen Kolbenstange 35 über ein ein Druckbegrenzungsventil 47 aufnehmendes Leitungssystem 48 mit dem Leitungssystem 41 verbunden. Wird nun an einem Hindernis Arbeitseinheit 3 gemäß Pfeilrichtung 49 entgegen der Fahrtrichtung FR um Achse 12 verschwenkt, muß sich der Doppelhubzylinder 14 längen. Dies geschieht in der Weise, daß der Zylinder 50 gegen den Kolben 51 der am L-förmigen Seitenrahmen 13 befestigten Kolbenstange 35 bewegt wird, wobei das im Kolbenstangen-Druckraum 37 befindliche energieübertragende Medium über Leitungssystem 48 und Druckbegrenzungsventil 47 in Leitungssystem 41 geschoben wird. Dabei wird die Kolbenstange 33 in den Hubzylinder 16 bewegt, sodaß die Arbeitseinheit 3 gleichzeitig in vertikaler Richtung angehoben wird.

### Bezugszeichenliste

- 1: Trägerfahrzeug
- 2: landwirtschaftliche Arbeitsmaschine
- 3: Arbeitseinheit
- 4: Arbeitseinheit
- 5: Arbeitseinheit
- 6: Mähorgane
- 7: Hauptrahmen
- 8: Anschlußstellen
- 9: Hubzylinder
- 10: Achse
- 11: Schwenkachse
- 12: Schwenkachse
- 13: L-förmiger Seitenrahmen
- 14: Doppelhubzylinder
- 15: Halteflansch
- 16: Hubzylinder
- 17: Achse
- 18: Achse
- 19: Hauptrahmen 19
- 20: Halteflansch
- 21: Halteflansch
- 22: Hubzylinder
- 23: Achse
- 24: Halteösen
- 25: Hauptrahmen
- 26: Achse
- 27: Koppel
- 28: Halteflansch
- 29: Halteflansch
- 30: Koppel
- 31: Kolbenstange
- 32: Kolbenstangen-Druckraum
- 33: Kolbenstange
- 34: Kolbenstange
- 35: Kolbenstange
- 36: Kolbenstangen-Druckraum
- 37: Kolbenstangen-Druckraum
- 38: Kolbenstangen-Druckraum
- 39: Leitung
- 40: Leitung
- 41: Leitungssystem
- 42: Druckspeicher
- 43: Absperrventil
- 44: Druckaufnehmer
- 45: Sicherheitsventil
- 46: Druckaufnehmer
- 47: Druckbegrenzungsventil
- 48: Leitungssystem
- 49: Pfeilrichtung
- 50: Zylinder
- 51: Kolben
- 52: Wand
- A: Gesamtarbeitsbreite
- B1-B3: Einzelarbeitsbreiten
- FR: Fahrtrichtung
- X1-X4: Stellsignale
- S1: unterer Schwellwert
- S2: oberer Schwellwert

## Patentansprüche

1. Landwirtschaftliche Arbeitsmaschine (2), insbesondere Großflächenmähwerk, bestehend aus einem Trägerfahrzeug (1) wenigstens zwei ein oder mehrere Arbeitsorgane (6) aufweisenden Arbeitseinheiten (3-5), die mittels Verstellelementen (14, 16) von einer Arbeits- in eine Nichtarbeits- oder Transportstellungstellung bewegbar ist, wobei das die Arbeitsorgane (6) tragende Trägerfahrzeug (1) über wenigstens einen die Arbeitsorgane (6) mit dem Trägerfahrzeug verbindenden Hubzylinder (9) verfügt, insbesondere
**dadurch gekennzeichnet,**
**daß** der wenigstens eine Hubzylinder (9) des Trägerfahrzeugs (1) doppeltwirkend ausgeführt ist und der Kolbenstangen-Druckraum (32) des wenigstens einen Hubzylinders (9) des Trägerfahrzeuges (1) und der Kolbenstangen-Druckraum (38) wenigstens eines Verstellelementes (16) zumindest einer Arbeitseinheit (3, 5) miteinander verbunden sind und
**daß** die Verbindung der Kolbenstangen-Druckräume (32, 38) durch ein Leitungssystem (39, 41) erfolgt, dem ein vom Leitungssystem (39, 41) trennbares elastisches Speicherelement (42) als Druckspeicher zugeordnet ist.

2. Steuerung einer landwirtschaftlichen Arbeitsmaschine nach einem oder mehreren der vorhergehenden Ansprüche,
**dadurch gekennzeichnet,**
**daß** die Trennbarkeit des elastischen Elementes (42) vom Leitungssystem (39, 41) durch ein vor dem elastischen Element (42) eingeschaltetes steuerbares Absperrventil (43) realisiert wird.

3. Steuerung einer landwirtschaftlichen Arbeitsmaschine nach einem oder mehreren der vorhergehenden Ansprüche,
**dadurch gekennzeichnet,**
**daß** die Ansteuerung des Absperrventils (43) direkt vom Trägerfahrzeug aus erfolgt und/oder als Schwellwertschaltung (S1, S2, 44, 46) mit der Regelgröße Systemdruck ausgeführt ist.

4. Steuerung einer landwirtschaftlichen Arbeitsmaschine nach Anspruch 5,
**dadurch gekennzeichnet,**
**daß** die Schwellwertschaltung (S1, S2, 44, 46) durch in das Leitungssystem (39, 41) integrierte Druckaufnehmer (44, 46) gebildet wird, wobei ein Druckaufnehmer (46) nach Überschreiten eines oberen Druck-Schwellwertes (S2) und ein weiterer Druckaufnehmer (44) nach Unterschreiten eines unteren Druck-Schwellwertes (S1) ein Signal (X3, X4) zum Öffnen des Absperrventils (43) erzeugen.

5. Steuerung einer landwirtschaftlichen Arbeitsmaschine nach einem oder mehreren der vorhergeneden Ansprüche,
**dadurch gekennzeichnet,**
**daß** bei Druckbeaufschlagung des Kolben-Druckraumes (32) wenigstens eines Hubzylinders (9) des Trägerfahrzeuges (1) ein Signal (X1) generiert wird, welches das Absperrventil (43) des Leitungssystems (39, 41) wenigstens einer Arbeitseinheit (3, 5) schließt.

6. Steuerung einer landwirtschaftlichen Arbeitsmaschine nach einem oder mehreren der vorhergenden Ansprüche,
**dadurch gekennzeichnet,**
**daß** bei Unterbrechung der Druckbeaufschlagung wenigstens eines Hubzylinders (9) ein Druckaufnehmer (44) ein Signal (X2) generiert, welches das Absperrventil (43) weiterhin geschlossen hält.

## Claims

1. An agricultural working machine (2), in particular large-area mowing mechanisms, comprising a carrier vehicle (1), at least two working units (3-5) having one or more working members (6), which is movable by means of displacement elements (14, 16) from a working position into a non-working or transport position, wherein the carrier vehicle (1) which carries the working members (6) has at least one stroke cylinder (9) connecting the working members (6) to the carrier vehicle,
**characterised in that**
the at least one stroke cylinder (9) of the carrier vehicle (1) is of a double-acting configuration and the piston rod pressure chamber (32) of the at least one stroke cylinder (9) of the carrier vehicle (1) and the piston rod pressure chamber (38) of at least one displacement element (16) of at least one working unit (3, 5) are connected together, and the connection of the piston rod pressure chambers (32, 38) is made by a conduit system (39, 41) with which an elastic storage element (42) which can be separated from the conduit system (39, 41) is associated as a pressure storage means.

2. Control of an agricultural working machine according to claim 1 **characterised in that** the separability of the elastic element (42) from the conduit system (39, 41) is implemented by a controllable shut-off valve (43) which is connected upstream of the elastic element (42).

3. Control of an agricultural working machine according to one or more of the preceding claims **characterised in that** actuation of the shut-off valve (43) is effected directly from the carrier vehicle and/or is in the form of a threshold circuit (S1, S2, 44, 46) with the regulating parameter of system pressure.

4. Control of an agricultural working machine according to claim 3 **characterised in that** the threshold circuit (S1, S2, 44, 46) is formed by pressure detectors (44, 46) integrated into the conduit system (39, 41), wherein a pressure detector (46), after an upper pressure threshold value (S2) is exceeded, and a further pressure detector (44), after the pressure falls below a lower pressure threshold value (S1), produce a signal (X3, X4) for opening the shut-off valve.

5. Control of an agricultural working machine according to one or more of the preceding claims **characterised in that** when the piston pressure chamber (32) of at least one stroke cylinder (9) of the carrier vehicle (1) is subjected to pressure a signal (X1) is generated which closes the shut-off valve (43) of the conduit system (39, 41) of at least one working unit (3, 5).

6. Control of an agricultural working machine according to one or more of the preceding claims **characterised in that** upon an interruption in the pressure actuation of at least one stroke cylinder (9) a pressure detector (44) generates a signal (X2) which still keeps the shut-off valve (43) closed.

## Revendications

1. Machine agricole de travail (2), en particulier mécanisme de coupe à grande surface, constituée d'un véhicule porteur (1) et d'au moins deux unités de travail (3-5) qui comportent un ou plusieurs organes de travail (6) et qui, au moyen d'éléments de déplacement (14, 16), sont déplaçables d'une position de travail vers une position de non-travail ou de transport, le véhicule porteur (1) qui porte les organes de travail (6) comportant au moins un vérin (9) reliant les organes de travail (6) au véhicule porteur, **caractérisée en ce que** le vérin (9), au nombre d'au moins un, du véhicule porteur (1) est conçu à double effet, et la chambre de pression de tige de piston (32) du vérin (9), au nombre d'au moins un, du véhicule porteur (1) et la chambre de pression de tige de piston (38) d'au moins un élément de déplacement (16) d'au moins une unité de travail (3, 5) sont reliées entre elles, et **en ce que** la liaison des chambres de pression de tige de piston (32, 38) s'effectue par l'intermédiaire d'un système de conduites (39, 41) auquel est associé un élément accumulateur élastique (42) faisant fonction d'accumulateur de pression séparable du système de conduites (39, 41).

2. Moyen de commande d'une machine agricole de travail selon une ou plusieurs des revendications précédentes, **caractérisé en ce que** la possibilité de séparer l'élément élastique (42) du système de conduites (39, 41) est réalisée par l'intermédiaire d'une valve d'arrêt commandée (43) implantée avant l'élément élastique (42).

3. Moyen de commande d'une machine agricole de travail selon une ou plusieurs des revendications précédentes, **caractérisé en ce que** la commande de la valve d'arrêt (43) s'effectue directement à partir du véhicule porteur et/ou est conçue sous la forme d'un circuit à valeur seuil (S1, S2, 44, 46) avec, comme grandeur réglée, la pression du système.

4. Moyen de commande d'une machine agricole de travail selon la revendication 5, **caractérisé en ce que** le circuit à valeur seuil (S1, S2, 44, 46) est formé par des capteurs de pression (44, 46) intégrés au système de conduites (39, 41), un capteur de pression (46) produisant, après surpassement d'une valeur seuil haute de pression (S2), et un autre capteur de pression (44) produisant, après soupassement d'une valeur seuil basse de pression (S1), un signal (X3, X4) pour ouvrir la valve d'arrêt (43).

5. Moyen de commande d'une machine agricole de travail selon une ou plusieurs des revendications précédentes, **caractérisé en ce qu'**en cas de mise en pression de la chambre de pression de vérin (32) d'au moins un vérin (9) du véhicule porteur (1) est généré un signal (X1) qui ferme la valve d'arrêt (43) du système de conduites (39, 41) d'au moins une unité de travail (3, 5).

6. Moyen de commande d'une machine agricole de travail selon une ou plusieurs des revendications précédentes, **caractérisé en ce que**, en cas d'interruption de la mise en pression d'au moins un vérin (9), un capteur de pression (44) génère un signal (X2) qui maintient la valve d'arrêt (43) fermée.
